# EUROPEAN PATENT SPECIFICATION

(11) **EP 0 535 159 B1**
(45) Date of publication and mention of the grant of the patent: **06.11.1996**
(21) Application number: 91913986.5
(22) Date of filing: 17.07.1991
(51) Int. Cl.: C03B 23/023, C03B 23/03

(54) **METHOD AND APPARATUS FOR ESTABLISHING A THERMALLY STABLE MOLD ASSEMBLY SUPPORT**
VERFAHREN UND VORRICHTUNG ZUM FORMEN EINES THERMISCH STABILEN TRÄGERS EINER MATRIZANORDNUNG
PROCEDE ET APPAREIL DE FORMATION D'UN SUPPORT THERMIQUEMENT STABLE POUR INSTALLATION DE MOULAGE

(30) Priority: 20.07.1990 US 556406
(43) Date of publication of application: 07.04.1993
(73) Proprietor: GLASSTECH, INC., Perrysburg, OH 43552 (US)
(72) Inventor: McMASTER, Ronald, A., Perrysburg, OH 43551 (US)
(74) Representative: Ben-Nathan, Laurence Albert
(86) International application number: US9105048
(87) International publication number: WO9201638

(56) References cited:
- US-A- 4 265 650
- US-A- 4 664 692
- US-A- 4 737 182
- US-A- 4 781 745

## Description

### TECHNICAL FIELD

This invention relates to method and apparatus providing a thermally stable reference point in a glass sheet forming station and more particularly to a mold support and drive connected to a geometric reference frame outside a glass sheet heating furnace for supporting a glass sheet shaping mold for movement within the glass sheet heating furnace having a forming section.

### BACKGROUND ART

In a conventional glass sheet forming system including a furnace having a forming section and a topside support device, a glass sheet is received by the topside support device which includes a downwardly facing surface for receiving the glass sheet prior to release onto a glass sheet shaping tool such as a lower mold used for forming the glass sheet. The glass sheet is supported on the topside support device by vacuum and pressure on the downwardly facing surface prior to being deposited onto the lower mold.

Pressurized gas is used to prevent surface-to-surface contact and to assist in conveying the glass sheet. Inertia of the glass sheet moving in a plane of conveyance in the furnace provides movement of the glass sheet supported on the topside support device into engagement with a suitable mechanical stop mounted on the topside support device. The pressurized gas stream can be inclined to assist the inertia in conveying the glass sheet to engagement with the mechanical stop. A back gate assembly is moved into position at the upstream end of the glass sheet to prevent it from bouncing off the mechanical stop. With the glass sheet so positioned, the vacuum drawn by the topside support device is terminated and the glass sheet is deposited on the lower mold below the topside support device.

The lower mold is then shuttled into the forming section wherein an upper mold, having a downwardly facing shaping surface, engages with the glass sheet on the lower mold imparting a shape to the glass sheet. This system incurs alignment problems as components of the apparatus heat up and undergo thermal expansion. These alignment problems occur at the interface of the topside support device and lower mold and also at the interface of the lower mold and upper mold, resulting in incorrectly formed glass sheets.

To lessen these alignment problems, a plurality of locators as taught in U.S. Patent No. 4,877,437 are mounted on the lower mold for accurately registering the glass sheet deposited from the topside support device on the lower mold. However, such tooling is expensive and requires high maintenance. Also, because such tooling and support structure are subjected to thermal gradients, the same undergoes thermal expansion and contraction that results in misalignment in the forming section at the interface of the upper and lower molds during engagement thereof.

### DISCLOSURE OF THE INVENTION

An object of the present invention is to provide a method and apparatus for an improved mold support and drive that is geometrically thermally stable in an environment of changing thermal gradients.

Another object of the invention is to provide a mold support and drive that maintains an accurate and reproducible geometric frame of reference for forming glass sheets by connecting a thermally stable reference point within a glass sheet heating furnace to a geometric frame of reference outside the furnace.

A further object of the invention is to provide a mold support and drive which generates cost savings by eliminating the need for high cost tooling and long start up periods during a part changeover.

The invention provides a glass forming system according to claim 1 and a method according to claim 7.

In carrying out the above objects and other objects of the invention, such a method and apparatus for such a mold support and drive is utilized in a glass sheet forming system including a glass sheet heating furnace including a furnace substructure and integral forming section. The forming section includes a topside support device and forming apparatus for forming the heated glass sheet. A lower mold receives the heated glass sheet from the topside support device and shuttles the glass sheet to the forming apparatus.

The mold support includes a frame or linkage that supports the mold and provides a thermally stable reference point within the furnace connected to a geometric frame of reference outside the furnace. The frame includes a pair of spaced longitudinal frame members which define lateral support locations fixed in a geometric frame of reference outside the furnace. The frame also includes a transverse frame member of a metal material mounted between the lateral frame members.

A mold assembly locator defines the lateral position of the thermally stable reference point within the furnace and is mounted on the transverse frame member. The mold assembly locator is cooperably registerable with the mold assembly for mounting the mold on the frame. A fused silica connector is mounted to and extends from one of the lateral frame members and is connected to the mold locator. The fused silica connector, which is unaffected by the temperature levels and thermal gradients encountered in glass sheet heating and cooling, accurately positions the mold locator with respect to the one lateral support location whereby the mold is accurately registerable on the frame and its location about the mold locator is generally unaffected by any thermal gradients or thermal expansion or contraction of the frame members. Preferably, the mold support includes another fused silica connector extending from the other lateral frame member and also connected to the mold locator. The mold locator defining the lateral position of the reference point within the furnace is preferably located on the longitudinal centerline of the furnace.

Mold assembly registering members define the longitudinal position of the thermally stable reference point within the furnace and are mounted on each longitudinal frame member. The mold assembly registering member is cooperatively registered with the mold assembly for mounting the mold on the frame.

The intersection of the longitudinal extension of the mold assembly locator and the lateral extension between the two mold assembly registering members defines the thermally stable reference point within the furnace. The thermally stable reference point is connected to a geometric frame of reference outside of the furnace.

By establishing a thermally stable reference point inside of the furnace relative to a geometric frame of reference outside of the furnace, the position of said point can be reliably known without directly measuring it since its relationship to the geometric frame of reference outside of the furnace is unchanging.

The mold support further includes a drive mechanism, unexposed to the furnace heat, for actuating translational movement of the frame relative to the furnace substructure. That drive mechanism includes guides fixedly mounted to the furnace substructure along each lateral support location. The drive mechanism also includes piers which extend vertically into the shaping section through slots in the furnace floor and that establish the geometric frame of reference outside the furnace in order to carry and support the longitudinal frame members which locate and support the mold assembly.

The above objects and other objects, features, and advantages of the present invention are readily apparent from the following detailed description of the best mode for carrying out the invention when taken in connection with the accompanying drawings.

### BRIEF DESCRIPTION OF THE DRAWINGS

FIGURE 1 is a perspective, partially cut-away view of a glass sheet forming system including a glass sheet heating furnace having a forming section and topside support device, illustrating a self-aligning mold support and drive constructed in accordance with the present invention;
FIGURE 2 is a perspective, partially cut-away view of the mold support and drive of FIGURE 1;
FIGURE 3 is an enlarged, partially cut-away view of a mold locator illustrating its mounting on the mold support; and
FIGURE 4 is an enlarged, partially cut-away view of a section of the mold support illustrating the construction that compensates for thermal expansion and contraction of the mold support.

### BEST MODE FOR CARRYING OUT THE INVENTION

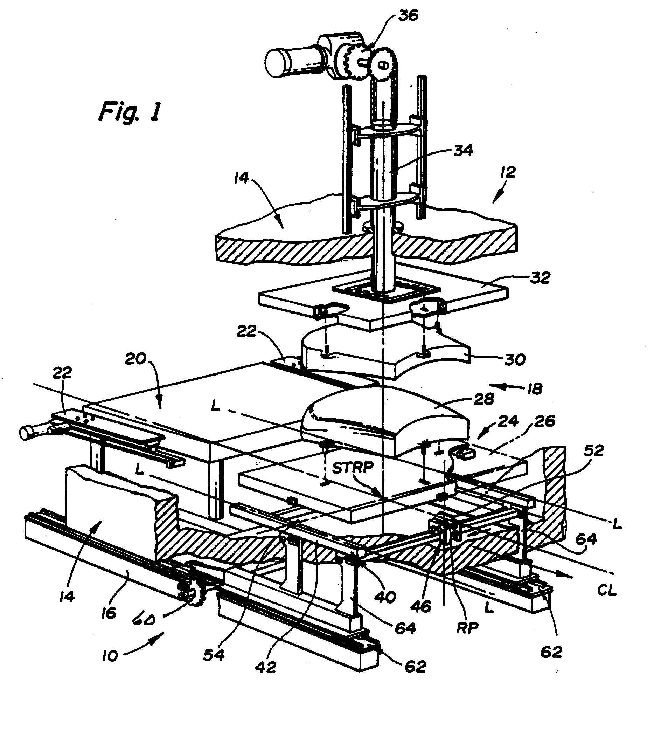

Referring to Figure 1 of the drawings, a mold assembly support and drive constructed in accordance with the present invention is generally indicated by reference numeral 10 and is used in a glass sheet forming system 12. As is hereinafter more fully disclosed, the mold assembly support 10 acts as a mechanical linkage providing a thermally stable reference point within a glass sheet heating furnace connected to a geometric frame of reference outside the furnace to provide a thermally stable frame of reference within the thermally unstable environment of the forming system 12. This thermally stable frame of reference to which glass sheet handling components are referenced allows heated glass sheets to be repeatedly shaped in a production operation. This ability is significant in the production of laminated windshield glass where exacting tolerances are critical as two sheets of formed glass are fit together after the forming.

With reference to Figure 1 of the drawings, the glass sheet forming system 12 includes a glass sheet heating furnace 14 including a heating conveyor, not shown, for heating a glass sheet. The furnace 14 includes a substructure 16 in a stable ambient environment and integral forming section 18. Forming section 18 includes a topside support device 20 which includes a downwardly facing surface for receiving the heated glass sheet prior to release onto a glass sheet shaping tool. A positioning device 22 accurately locates the heated glass sheet with respect to the downwardly facing surface of the topside support device 20. The forming section 18 also includes a mold assembly 24 comprised of a lower mold backplane 26 and lower full face male mold 28 for receiving the heated glass sheet from the topside support device 20.

An upper female mold 30 supported on an upper mold backplane 32 presses the glass sheet between the lower full face male mold 28 and upper female mold 30 to form the heated glass sheet. An upper mold backplane lifter 34 actuated by an actuator 36 actuates vertical movement of the upper female mold 30.

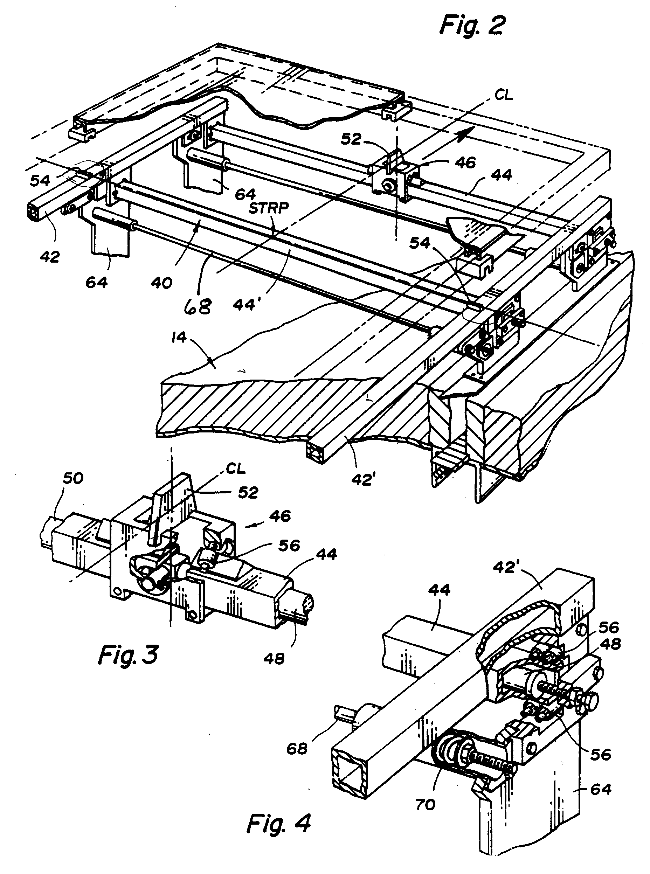

With reference to Figures 1 and 2 of the drawings, the mold assembly support 10 that supports lower mold backplane 26 and lower full face male mold 28 comprises a frame 40 which includes a pair of spaced longitudinally extending lateral frame members 42,42' defining lateral support locations L-L relative to a geometric frame of reference outside the furnace 14 and paralleling the longitudinal axis or centerline CL of the furnace. Frame 40 also includes a transverse frame member 44 mounted between the lateral frame members 42,42'. A mold assembly locator 46 including registering member 42, defines the lateral position of the thermally stable reference point within furnace 14 and best seen in Figure 3. Registering member 52 is cooperably registerable with the lower mold backplane and lower full face male mold 28 on frame 40 such that male mold 28 is accurately located laterally with respect to the longitudinal axis of furnace 14.

With reference to Figures 3 and 4 of the drawings, fused silica connectors 48 and 50, which are generally unaffected by thermal gradients encountered in the heating furnace 14, are mounted and extend from each of the lateral frame members 42 and 42' and clamp the mold locator 46 for accurate lateral positioning of the mold locator with respect to longitudinal axis CL of the furnace. Hereby, the lateral position of the thermally stable reference point within furnace 14 is connected via connectors 48 and 50, to a geometric frame of reference outside the furnace 14 rendering the mold locator 46 inside the furnace thermally stable with respect to the outside of the furnace. Mold locator 46 is thereby maintained in an unchanging spaced relation relative to the lateral support locations.

Frame 40 further includes mold assembly registering members 54 mounted on the lateral frame members 42,42' for fixing the lower mold backplane support 26 and lower mold 28 in the longitudinal direction. Similar registration is disclosed in U.S. Patent No. 4,781,745 which is hereby incorporated by reference. Together these registration members 52,54, which key lower mold backplane 26 to support 10, to accurately align the mold with a stable thermal reference point STRP at the intersection of a longitudinal line through registration element 52 and a transverse line through registering members 54.

Referring again to Figure 1 of the drawings, a drive mechanism 60 illustrated as a rack and pinion drive, actuates translational movement of frame 40 relative to the furnace substructure 16. Drive 60 is located beneath the forming section 18 in the ambient environment and is generally unaffected by thermal gradients experienced by the frame members 42,42' and 44. Guides 62 are fixedly mounted to the furnace substructure 16 in the ambient environment, and have vertically extending piers 64 slidably mounted thereon. Lateral frame members 42,42' are mounted on piers 64, thereby establishing fixed lateral support locations L-L that are unaffected by thermal gradients within the furnace.

As shown in Figures 2 and 4, a tensioner 68 has an adjustable spring means 70 and extends between the lateral frame members 42,42'. Spring means 70 preloads the piers 64 against the laterally extending fused silica connectors 48 and 50. As shown in Figure 2 of the drawings, mold assembly support 10 includes two such tensioners 68. Additionally, the preferred mold assembly support 10 includes a second transverse frame member 44' that also includes a fused silica connector which similarly extends between the lateral frame members 42,42' to provide additional frame structure.

Referring to Figures 3 and 4, the fused silica connectors 48,50 are each mounted within steel tube 44. Similarly, a fused silica connector is mounted within steel tube 44'. Each of steel tubes 44 and 44' are mounted for sliding engagement with rollers 56 at the lateral frame members 42 and 42', as well as at the juncture between the connectors 48,50 and the mold locator 46. This sliding engagement with rollers 56 further isolates the mold locator 46 from changes in the lengths of the steel tubes 44 due to thermal expansion or contraction.

The thermally stable mounting of the mold assembly 24 on the mold assembly support 10 by the registration members 52,54 maintains the mold 28 along the same longitudinal and lateral reference connected to the frame of reference outside of the furnace regardless of thermal gradients and assures that each glass sheet received from the topside support device 20 is accurately positioned on full face male mold 28. This accurate positioning of the glass sheet further assures that upper female mold 30 of integral forming section 18 will accurately cooperate with lower mold 28 to provide a reproducible shape in each glass sheet.

While the best mode for carrying out the invention has been described in detail, those familiar with the art to which this invention relates will recognize various alternative designs and embodiments for practicing the invention as defined by the following claims.

## Claims

1. A glass sheet forming system (12) comprising:
a glass sheet heating furnace (14) having a longitudinal axis and adapted for heating a glass sheet, the furnace including a furnace substructure (16) comprising a frame of reference outside the furnace (14) and integral forming section (18), the forming section (18) including a topside support device (20) and forming apparatus for forming the heated glass sheet;
a mold assembly (24) for receiving the heated glass sheet from the topside support device (20) and for shuttling the glass sheet to the forming apparatus;
a frame (40) that supports the mold assembly (24), said frame (40) including a pair of spaced longitudinally extending lateral frame members (42,42') defining lateral support locations slidably mounted on said frame of reference (16) outside the furnace for longitudinal movement while fixed in the lateral direction, and said frame (40) also including a transverse frame member (44) mounted between said lateral frame members;
a drive mechanism (60) for actuating translational movement of said frame (40) relative to the furnace substructure (16) comprising said frame of reference outside the furnace;
a mold assembly locator (46) defining the lateral position of a stable thermal reference point (STRP) within the furnace (14) mounted on said transverse frame member (44), said mold assembly locator (46) being cooperably registerable with the mold assembly (24) for mounting the mold assembly (24) on said frame (40);
a mold assembly registering member (54) defining the longitudinal position of the stable thermal reference point (STRP) mounted on each said lateral frame member (42,42'), said mold assembly registering member (54) being cooperably registerable with the mold assembly (24) for mounting the mold assembly (24) on said frame (40); and
connectors (48,50) mounted within said transverse frame member (44) and connected with and extending from each of said lateral frame members (42,42') and connected to said mold locator (46), thereby connecting the mold locator (46) to said lateral frame members (42,42') and thereby to the fixed lateral support locations connected to the frame of reference (16) outside the furnace (14) to establish the lateral position of the stable thermal reference point (STRP) within the furnace, whereby the mold assembly (24) is accurately located on said frame (40) about the stable thermal reference point (STRP) and its location thereon is maintained with respect to the frame of reference (16) outside of the furnace and the mold assembly positioning is generally unaffected by any thermal expansions or contractions.

2. A forming system (12) as in claim 1 wherein said drive mechanism is located beneath the forming section (18) in the ambient environment and is generally unaffected by thermal expansions or contractions.

3. A forming system (12)as in claim 2 wherein said drive mechanism (60) includes guides (62) fixedly mounted to the furnace substructure (16) along said lateral support locations and a plurality of vertically extending piers (64) connected to said lateral frame members (42,42'), which piers (64) mount said longitudinally extending lateral frame members (42,42') for longitudinal movement on said guides (62).

4. A forming system (12) as in claim 3 further including a tensioner (68) having adjustable draw spring means and extending between said lateral frame members (42,42') for preloading the piers (64) against the fused silica connectors (48,50).

5. A forming system (12) as in claim 4 further including first and second mounts; said first mount rigidly connecting one lateral frame member (42) and said transverse frame member (44), and said second mount movably connecting the other of said one lateral frame members (42') to said transverse frame member (44) thereby allowing expansion and contraction of said transverse frame member from said first mount.

6. A forming system 12 as in claim 1 wherein each of said connectors (48,50) is a fused silica bar.

7. A method of establishing a stable thermal reference point (STRP) within a glass sheet forming system (12) including a glass sheet heating furnace (14) having a longitudinal axis and adapted for heating a glass sheet, and an integral forming section (18), the forming section including a top-side support device (20) and a forming apparatus, the forming apparatus including a mold assembly (24) for receiving the heated glass sheet from the top-side support device and for shuttling the glass sheet to the forming apparatus, the method comprising:
establishing a furnace substructure (16) comprising a frame of reference outside the furnace;
slidably mounting a mold assembly support frame (40) on said frame of reference outside the furnace for longitudinal movement of the support frame (40) while fixed in the lateral direction, said support frame including a pair of spaced longitudinally extending lateral frame members (42,42') defining lateral support locations, and said frame also including a transverse frame member (44) mounted between said lateral frame members (42,42');
mounting a mold assembly locator (46) on said transverse frame member (44) to define the lateral position of the STRP within the furnace (14), said mold assembly locator (46) being cooperably registerable with the mold assembly (24) for mounting the mold assembly (24) on said frame (40);
connecting a mold assembly registering member (54) on each said lateral frame member to define the longitudinal position of the STRP within the furnace, said mold assembly registering member being cooperably registerable with the mold assembly (24) for mounting the mold assembly on said frame (40);
mounting a connector (48,50) within said transverse frame member (44) and connected with and extending from each of said lateral frame members (42,42') and connected to said mold locator (46), thereby connecting the mold locator to said lateral frame members and thereby to the fixed lateral support locations connected to the frame of reference (16) outside the furnace (14) to establish the lateral position of the STRP, said connectors (48,50) accurately positioning said mold locator (46) with respect to said lateral support locations, whereby the mold assembly (24) is accurately located on said frame (40) about the STRP and its location thereon is maintained with respect to the frame of reference (16) outside of the furnace (14) and the mold assembly positioning is generally unaffected by any thermal expansions or contractions.

## Patentansprüche

1. Glasplatte-Formgebungssystem (12), bestehend aus:
einem Glasplatte-Erwärmungsofen (14) mit einer Längsachse und angepaßt für die Erwärmung einer Glasplatte, wobei der Ofen eine Ofensubstruktur (16) aufweist, die aus einem Bezugsrahmen außerhalb des Ofens (14) und einem integrierten Formgebungsbereich (18) besteht, wobei der Formgebungsbereich (18) eine Oberseite-Trägervorrichtung (20) und eine Formgebungsvorrichtung zur Formgebung der erwärmten Glasplatte aufweist;
einer Formenbaugruppe (24) zur Aufnahme der erwärmten Glasplatte von der Oberseite-Trägervorrichtung (20) und für eine Pendelbewegung der Glasplatte zu der Formgebungsvorrichtung;
einem Rahmen (40), der die Formenbaugruppe (24) trägt, wobei der Rahmen (40) ein Paar voneinander beabstandeter, in Längsrichtung verlaufender seitlicher Rahmenkörper (42, 42') aufweist, die seitliche Abstützorte definieren, die an dem Bezugsrahmen (16) außerhalb des Ofens für eine Längsbewegung verschieblich montiert sind, während sie in der seitlichen Richtung befestigt sind, wobei der Rahmen (40) auch einen Querrahmenkörper (44) aufweist, der zwischen diesen seitlichen Rahmenkörpern montiert ist;
einem Antriebsmechanismus (60) zur Veranlassung einer Translation des Rahmens (40) relativ zu der Ofensubstruktur (16), die aus dem Bezugsrahmen außerhalb des Ofens besteht;
einem Stellglied (46) der Formenbaugruppe, welches die seitliche Position eines stabilen thermischen Bezugspunktes (STRP) innerhalb des Ofens (14) definiert und an dem Querrahmenkörper (44) befestigt ist, wobei das Stellglied (46) der Formenbaugruppe mit der Formenbaugruppe (24) zur Befestigung der Formenbaugruppe (24) an dem Rahmen (40) zusammenwirkend registrierbar ist;
einem Registrierkörper (54) der Formenbaugruppe, welcher die Längsposition des stabilen thermischen Bezugspunktes (STRP) definiert und an jedem seitlichen Rahmenkörper (42, 42') befestigt ist, wobei der Registrierkörper (54) der Formenbaugruppe mit der Formenbaugruppe (24) zur Befestigung der Formenbaugruppe (24) an dem Rahmen (40) zusammenwirkend registrierbar ist; und
Verbindungsstücken (48, 50), die innerhalb des Querrahmenkörpers (44) befestigt und mit jedem der seitlichen Rahmenkörper (42, 42') verbunden sind und von dort verlaufen und auch verbunden sind mit dem Stellglied (46) der Form, wodurch das Stellglied (46) der Form mit den seitlichen Rahmenkörpern (42, 42') verbunden sind und dadurch mit den festen seitlichen Abstützorten, die mit dem Bezugsrahmen (16) außerhalb des Ofens (14) verbunden sind, um die seitliche Position des stabilen thermischen Bezugspunktes (STRP) innerhalb des Ofens herzustellen, wodurch die Formenbaugruppe (24) genau an dem Rahmen (40) um den stabilen thermischen Bezugspunkt (STRP) herum angeordnet ist und ihre Lokalisierung daran beibehalten wird in Bezug auf den Bezugsrahmen (16) außerhalb des Ofens, während die Positionierung der Formenbaugruppe generell unbeeinträchtigt bleibt durch irgendwelche thermische Ausdehnungen oder Zusammenziehungen.

2. Formgebungssystem (12) nach Anspruch 1, bei welchem der Antriebsmechanismus unterhalb des Formgebungsbereichs (18) in der Umgebungsumwelt angeordnet ist und generell unbeeinträchtigt bleibt von thermischen Ausdehnungen oder Zusammenziehungen.

3. Formgebungssystem (12) nach Anspruch 2, bei welchem der Antriebsmechanismus (60) Führungen (62) aufweist, die an der Ofensubstruktur (16) entlang der seitlichen Abstützorte fest montiert sind, und eine Vielzahl von vertikal verlaufenden Stützen (64), die mit den seitlichen Rahmenkörpern (42, 42') verbunden sind; wobei die Stützen (64) die in Längsrichtung verlaufenden seitlichen Rahmenkörper (42, 42') für eine Längsbewegung an den Führungen (62) befestigen.

4. Formgebungssystem (12) nach Anspruch 3, welches weiterhin ein Spannteil (68) mit einer einstellbaren Ziehfedereinrichtung aufweist und zwischen den seitlichen Rahmenkörpern (42, 42') verläuft, um die Stützen (64) gegen die Verbindungsstücke (48, 50) aus geschmolzenem Silica vorzubelasten.

5. Formgebungssystem (12) nach Anspruch 4, welches weiterhin erste und zweite Träger aufweist, wobei der erste Träger einen seitlichen Rahmenkörper (42) und den Querrahmenkörper (44) starr verbindet und der zweite Träger den anderen einen seitlichen Rahmenkörper (42') mit dem Querrahmenkörper (44) beweglich verbindet, um dadurch eine Ausdehnung und ein Zusammenziehen des Querrahmenkörpers von dem ersten Träger zu erlauben.

6. Formgebungssystem (12) nach Anspruch 1, bei welchem jedes der Verbindungsstücke (48, 50) eine Stange aus geschmolzenem Silica ist.

7. Verfahren zur Bereitstellung eines stabilen thermischen Bezugspunktes (STRP) innerhalb eines Glasplatte-Formgebungssystems (12), welches einen Glastafel-Erwärmungsofen (14) aufweist, der eine Längsachse hat und für das Erwärmen einer Glastafel angepaßt ist, und einen integrierten Formgebungsbereich (18), wobei der Formgebungsbereich eine Oberseite-Trägervorrichtung (20) und eine Formgebungsvorrichtung aufweist, wobei die Formgebungsvorrichtung eine Formenbaugruppe (24) zur Aufnahme der erwärmten Glasplatte von der Oberseite-Trägervorrichtung und für eine Pendelbewegung der Glasplatte zu der Formgebungsvorrichtung aufweist, wobei das Verfahren besteht aus:
Bereitstellung einer Ofensubstruktur (16), die einen Bezugsrahmen außerhalb des Ofens aufweist;
verschiebliche Befestigung eines Abstützrahmens (40) der Formenbaugruppe an dem Bezugsrahmen außerhalb des Ofens für eine Längsbewegung des Abstützrahmens (40), während er in der seitlichen Richtung befestigt ist, wobei der Abstützrahmen ein Paar voneinander beabstandeter, in Längsrichtung verlaufender seitlicher Rahmenkörper (42, 42') aufweist, die seitliche Abstützorte definieren, und der Rahmen auch einen Querrahmenkörper (44) aufweist, der zwischen den seitlichen Rahmenkörpern (42, 42') befestigt ist;
Befestigung eines Stellgliedes (46) der Formenbaugruppe an dem Querrahmenkörper (44), um die seitliche Position des STRP innerhalb des Ofens (40) zu definieren, wobei das Stellglied (46) der Formenbaugruppe mit der Formenbaugruppe (24) zusammenwirkend registrierbar ist für eine Befestigung der Formenbaugruppe (24) an dem Rahmen (40);
Verbinden eines Registrierkörpers (54) der Formenbaugruppe an jedem seitlichen Rahmenkörper, um die Längsposition des STRP innerhalb des Ofens zu definieren, wobei der Registrierkörper der Formenbaugruppe mit der Formenbaugruppe (24) zusammenwirkend registrierbar ist für eine Befestigung der Formenbaugruppe an dem Rahmen (40);
Befestigen eines Verbindungsstückes (48, 50) innerhalb des Querrahmenkörpers (44) und verbunden mit den seitlichen Rahmenkörpern (42, 42') sowie von dort verlaufend und verbunden mit dem Stellglied (46) der Form, wodurch das Stellglied der Form mit den seitlichen Rahmenkörpern verbunden wird und dadurch mit den festen seitlichen Abstützbauten, die mit dem Bezugsrahmen (16) außerhalb des Ofens (14) verbunden sind, um die seitliche Position des STRP bereitzustellen, wobei die Verbindungsstücke (48, 50) das Stellglied (46) der Form genau positionieren in Bezug auf die seitlichen Abstützorte, wodurch die Formenbaugruppe (24) genau an dem Rahmen (40) um den STRP herum angeordnet wird und ihre Lokalisierung daran beibehalten wird in Bezug auf den Bezugsrahmen (16) außerhalb des Ofens (14) und die Positionierung der Formenbaugruppe generell unbeeinträchtigt ist durch irgendwelche thermische Ausdehnungen oder Zusammenziehungen.

## Revendications

1. Système de façonnage de feuilles de verre (12) comprenant:
un four de chauffage de feuille de verre (14) ayant un axe longitudinal et conçu pour chauffer une feuille de verre, le four comportant une sous-structure de four (16) comprenant un cadre de référence extérieur au four (14) et une section de façonnage intégrale (18), la section de façonnage (18) comportant un dispositif de support de la partie supérieure et un appareil de façonnage pour façonner la feuille de verre chauffée;
une installation de moulage (24) destinée à recevoir la feuille de verre chauffée du dispositif de support de la partie supérieure (20) et à acheminer la feuille de verre vers l'appareil de façonnage;
un cadre (40) qui supporte l'installation de moulage (24), ledit cadre (40) comportant une paire d'éléments de cadre latéraux espacés s'étendant longitudinalement (42, 42') définissant des positions de support latérales, montés de façon coulissante sur ledit cadre de référence (16) extérieur au four pour un mouvement longitudinal, tout en étant fixés dans la direction latérale, et ledit cadre (40) comportant également un élément de cadre transversal (44) monté entre lesdits éléments de cadre latéraux;
un mécanisme d'entraînement (60) pour provoquer un mouvement de translation dudit cadre (40) par rapport à la sous-structure de four (16) comprenant ledit cadre de référence extérieur au four;
un positionneur (46) d'installation de moulage définissant la position latérale d'un point de référence thermique stable (PRTS) à l'intérieur du four (14), monté sur ledit élément de cadre transversal (44), ledit positionneur (46) d'installation de moulage pouvant être aligné en coopérant avec l'installation de moulage (24) pour le montage de l'installation de moulage (24) sur ledit cadre (40);
un élément (54) d'alignement d'installation de moulage définissant la position longitudinale du point de référence thermique stable (PRTS), monté sur chacun desdits éléments de cadres latéraux (42, 42'), ledit élément (54) d'alignement d'installation de moulage pouvant être aligné en coopérant avec l'installation de moulage (24) pour le montage de l'installation de moulage (24) sur ledit cadre (40); et
des raccords (48, 50) montés à l'intérieur dudit élément de cadre transversal (44) et raccordés à chacun desdits éléments de cadres latéraux (42, 42') en partant de ceux-ci, et également raccordés audit positionneur de moule (46), afin de raccorder le positionneur de moule (46) auxdits éléments de cadre latéraux (42, 42') et par conséquent, aux positions de support latérales fixes liées au cadre de référence (16) extérieur au four (14), afin d'établir la position latérale du point de référence thermique stable (PRTS) à l'intérieur du four, pour que l'installation de moulage (24) soit positionnée avec précision sur ledit cadre (40) par rapport au point de référence thermique stable (PRTS), que sa position sur celui-ci soit maintenue par rapport au cadre de référence (16) extérieur au four et que le positionnement de l'installation de moulage ne soit globalement pas affecté par d'éventuelles dilatations ou contractions thermiques.

2. Système de façonnage (12) selon la revendication 1, dans lequel ledit mécanisme d'entraînement est situé sous la section de façonnage (18) dans le milieu ambiant et n'est globalement pas affecté par des dilatations ou des contractions thermiques.

3. Système de façonnage (12) selon la revendication 2, dans lequel ledit mécanisme d'entraînement (60) comporte des guides (62) montés de façon fixe sur la sous-structure de four (16) le long desdites positions de support latérales et une pluralité de piliers s'étendant verticalement (64) reliés auxdits éléments de cadre latéraux (42, 42'), lesquels piliers (64) permettent de monter lesdits éléments de cadre latéraux s étendant longitudinalement (42, 42') pour un mouvement longitudinal sur lesdits guides (62).

4. Système de façonnage (12) selon la revendication 3, comportant en outre un tendeur (68) ayant des moyens à ressorts de traction réglables et s'étendant entre lesdits éléments de cadres latéraux (42, 42') pour précharger les piliers (64) contre les raccords (48, 50) en silice fondue.

5. Système de façonnage (14) selon la revendication 4, comportant en outre des premier et second bâtis; ledit premier bâti reliant de façon rigide un élément de cadre latéral (42) audit élément de cadre transversal (44), et ledit second bâti reliant de façon mobile l'autre desdits éléments de cadres latéraux (42') audit élément de cadre transversal (44) afin de permettre une dilatation et une contraction dudit élément de cadre transversal par rapport audit premier bâti.

6. Système de façonnage (12) selon la revendication 1, dans lequel chacun desdits raccords (48, 50) est une barre en silice fondue.

7. Procédé de formation d'un point de référence thermique stable (PRTS) à l'intérieur d'un système de façonnage de feuille de verre (12) comportant un four (14) de chauffage de feuille de verre, ayant un axe longitudinal et étant conçu pour chauffer une feuille de verre, et une section de façonnage intégrale (18), la section de façonnage comportant un dispositif de support de la partie supérieure (20) et un appareil de façonnage, l'appareil de façonnage comportant une installation de moulage (24) destinée à recevoir la feuille de verre chauffée du dispositif de support de la partie supérieure et à acheminer la feuille de verre vers l'appareil de façonnage, le procédé comprenant:
la formation d'une sous-structure de four (16) comprenant un cadre de référence extérieur au four;
le montage de façon coulissante d'un cadre de support d'installation de moulage (40) sur ledit cadre de référence extérieur au four pour un mouvement longitudinal du cadre de support (40) tout en le laissant fixe dans la direction latérale, ledit cadre de support comportant une paire d'éléments de cadre latéraux espacés s'étendant longitudinalement (42, 42') et définissant des positions de support latérales, et ledit cadre comportant également un élément de cadre transversal (44) monté entre lesdits éléments de cadre latéraux (42, 42');
le montage d'un positionneur d'installation de moulage (46) sur ledit élément de cadre transversal (44) afin de définir la position latérale du PRTS à l'intérieur du four (14), ledit positionneur (46) d'installation de moulage pouvant être aligné en coopérant avec l'installation de moulage (24) pour monter l'installation de moulage (24) sur ledit cadre (40);
le raccordement d'un élément (54) d'alignement d'installation de moulage sur chacun desdits éléments de cadres latéraux, afin de définir la position longitudinale du PRTS à l'intérieur du four, ledit élément d'alignement d'installation de moulage pouvant être aligné en coopérant avec l'installation de moulage (24) pour le montage de l'installation de moulage sur ledit cadre (40);
le montage d'un raccord (48, 50) à l'intérieur dudit élément de cadre transversal (44) et son raccordement à chacun desdits éléments de cadres latéraux (42, 42') de façon qu'il parte de ceux-ci, et son raccordement auxdits positionneurs de moule (46), afin de raccorder le positionneur de moule auxdits éléments de cadre latéraux et par conséquent, aux positions de support latérales fixes liées au cadre de référence (16) extérieur au four (14), afin d'établir la position latérale du PRTS, lesdits raccords (48, 50) positionnant de façon précise ledit dispositif de positionnement de moule (46) par rapport auxdites positions de support latérales, afin que l'installation de moulage (24) soit positionnée avec précision sur ledit cadre (40) par rapport au PRTS, que sa position sur celui-ci soit maintenue par rapport au cadre de référence (16) extérieur au four (14) et que le positionnement de l'installation de moulage ne soit globalement pas affecté par d'éventuelles dilatations ou contractions thermiques.
